# EUROPEAN PATENT SPECIFICATION

(11) **EP 1 271 191 B1**
(45) Date of publication and mention of the grant of the patent: **25.02.2004**
(21) Application number: 02425237.1
(22) Date of filing: 17.04.2002
(51) Int. Cl.: G02B 5/128

(54) **A process for manufacturing a heat-adhesive retroreflecting sheet**
Verfahren zur Herstellung einer heissklebenden retroreflektierenden Folie
Procédé pour produire une feuille rétroréfléchissante thermo-adhésive

(30) Priority: 21.06.2001 IT MO20010125
(43) Date of publication of application: 02.01.2003
(73) Proprietor: Autoadesivi S.p.A., 41019 Soliera, (Province of Modena) (IT)
(72) Inventor: Corradi, Paolo, 42015 Correggio, Reggio Emilia (IT)
(74) Representative: Gotra, Stefano

(56) References cited:
- EP-A- 0 291 178
- US-A- 4 023 889
- US-A- 4 075 049
- US-A- 5 194 113
- US-A- 5 837 347

## Description

Specifically though not exclusively the invention is usefully applied in manufacturing a back-reflecting heat-adhesive strip or other material.

The prior art teaches processes which realise an application of the reflecting material, constituted by micro spheres, on films or textile materials. The products obtained using the known processes exhibit some limitations with regard to duration and type of use.

The main aim of the present invention is to obviate the drawbacks in the prior art by providing a process which enables the manufacture of a product characterised by high resistance to high temperatures, to dry and wet-washing, to abrasion and other mechanical stresses to which reflecting materials are typically subjected. In particular the process provides a high-quality back-reflecting material able fully to satisfy the existing standards in the field.

An advantage of the object of the invention is that it is substantially simple. These aims and more besides are all attained by the invention as it is characterised in the claims that follow.

Further characteristics and advantages of the present invention will better emerge from the detailed description that follows, of a preferred but non-exclusive embodiment of the invention, illustrated purely by way of example in the appended figures of the drawings, in which:

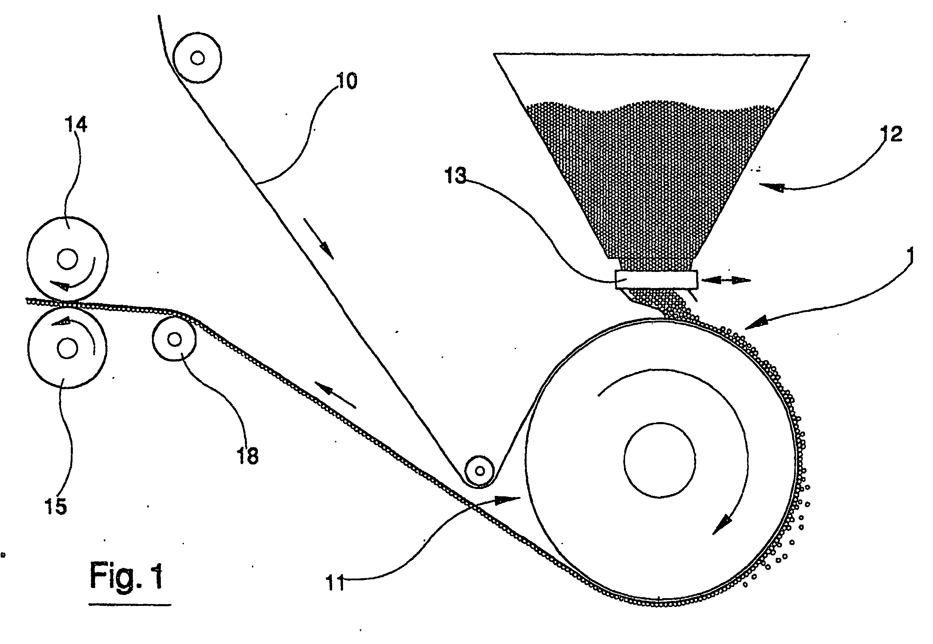

figure 1 is a schematic view of an apparatus for realising the first stage of the process;

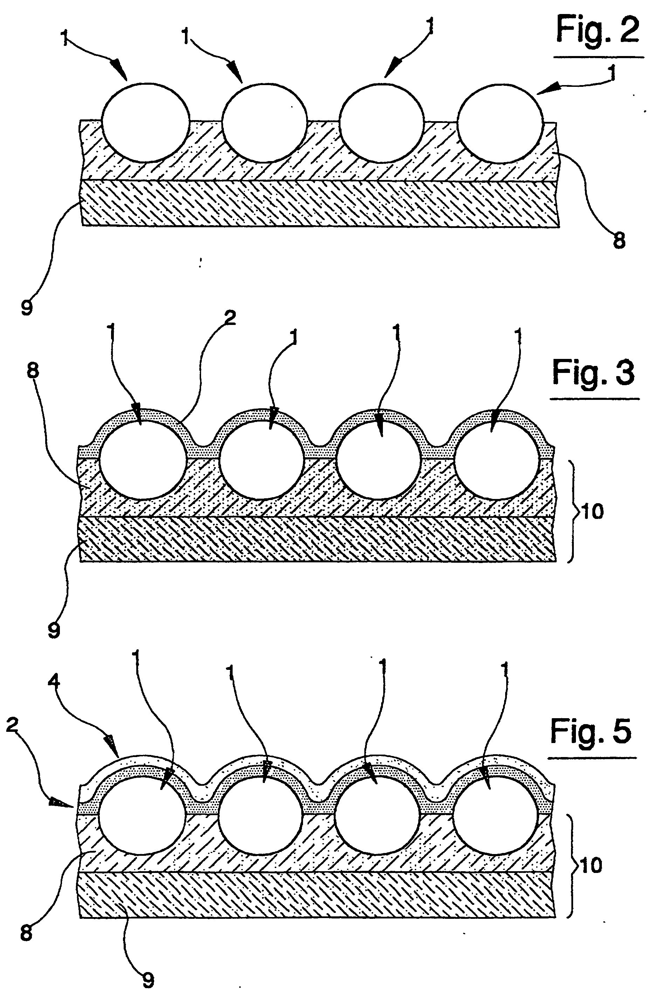

figure 2 is an enlarged-scale partial transversal section of the unfinished workpiece obtained from the first process stage;
figure 3 is an enlarged-scale view of a partial transversal section of the unfinished workpiece obtained from the second process stage;

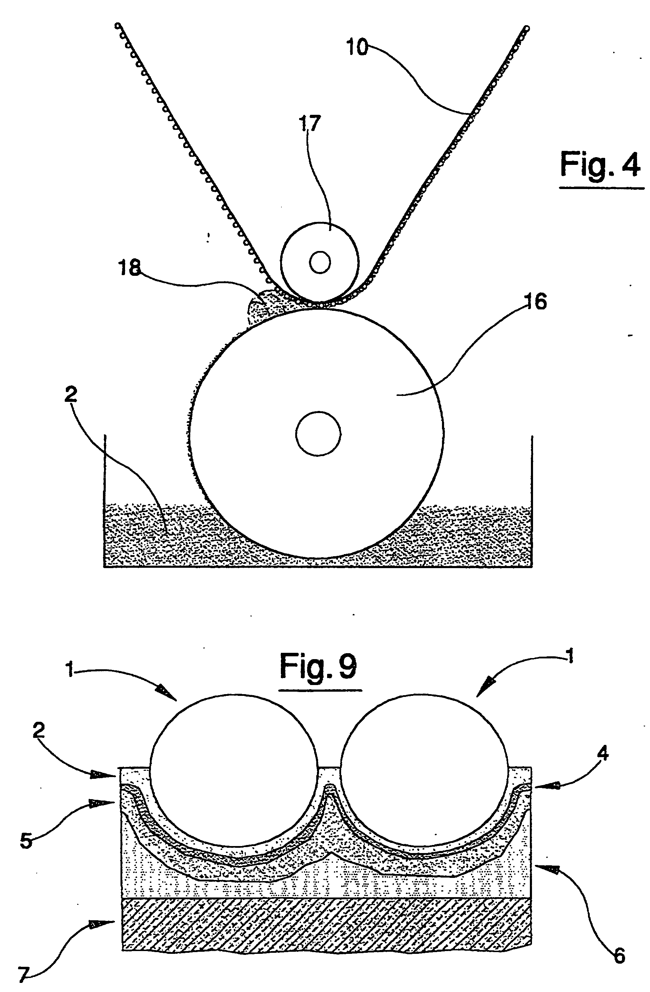

figure 4 is a schematic view of an apparatus for realising the second process stage;

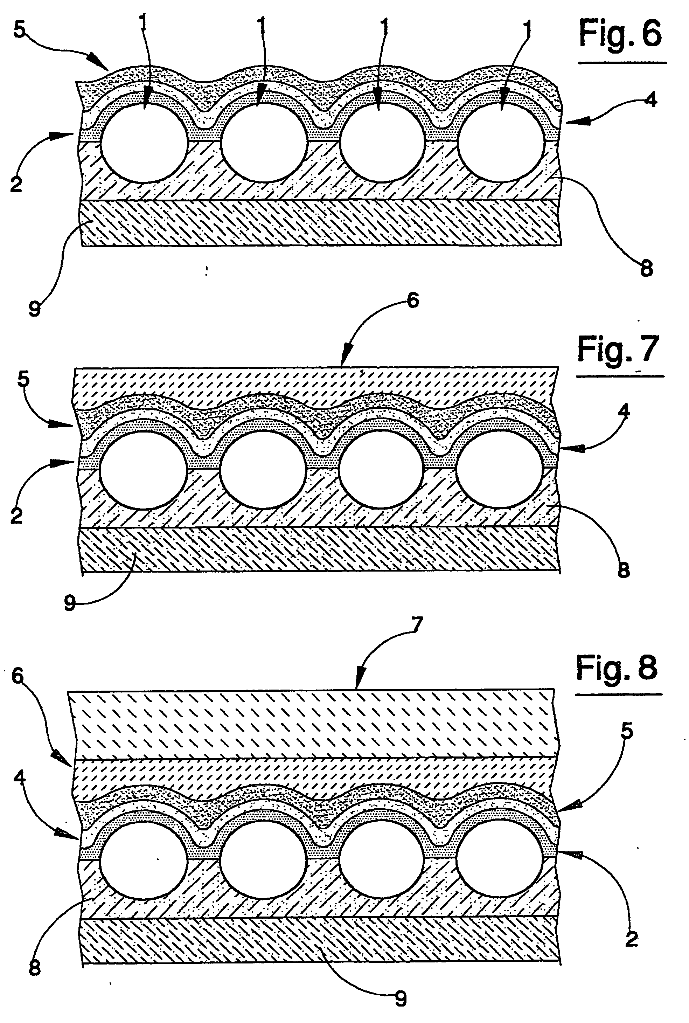

figure 5 is an enlarged-scale view of a partial transversal section of the unfinished workpiece obtained from the fourth process stage;
figure 6 is an enlarged-scale view of a partial transversal section of the unfinished workpiece obtained from the fifth process stage;
figure 7 is an enlarged-scale view of a partial transversal section of the unfinished workpiece obtained from the sixth process stage;
figure 8 is an enlarged-scale view of a partial transversal section of the unfinished workpiece obtained from the seventh process stage;
figure 9 is a more greatly-enlarged view of a partial transversal section of the unfinished workpiece obtained from the final process stage.

With reference to the figures of the drawings, 1 denotes in its entirety microspheres of a transparent material which are used in the process to form a reflecting film, which process comprises, in order:
fixing microspheres 1 on a thin polyethylene film 8 which is supported by a thin polyester film 9 to form a support, denoted in its entirety by 10; the polyethylene film 8 is heated up to a temperature at which it softens and the microspheres 1 sink into it up to a predetermined depth;
covering a side of the polyethylene film 8 housing the microspheres 1 with a thin first layer of a primer 2;
performing a surface-treatment on an external surface 3 of the primer 2 layer; laying under vacuum conditions a thin layer of metal 4, in a process known as metalisation, on the external surface 3 previously subjected to the surface-treatment; covering the metal layer 4 with a second layer 5 of a primer for metals;
spreading, on a second layer of primer 5, a protective third layer of primer 6, which third layer 6 is soft and resistant to water and detergents;
coupling a strip or material of heat-activated glue 7 on the third layer of protective primer 6;
storing for a period of time to enable polymerisation reactions to be completed;
possible removal of the composite support 10. Removal of the support strip 10 is normally done when a back-reflecting material has been used, while it is not normally done where a heat-activated glued strip is used.

The thickness of the polyethylene film and polyester film are respectively 20 and 30ö80µm.

For fixing the microspheres 1, the thin film of polyethylene 8 is heated to a temperature comprised between 110 degrees Celsius and 170 degrees Celsius.

The operation is performed in a rotary machine supplied with a continuous belt of composite support film 10 which is partially wound and made to pass onto a rotating heating cylinder 11 in contact with the polyester film 8 side of the support 10.

The heating-up produces a softening of the polyethylene film 8, which enables the microspheres 1 to settle and partially sink there-into. The microspheres are made to fall from a distributor 12 provided with a sieve 13 located at a short distance (about 4 cm.) above the heated cylinder 11.

The film embraces the heated cylinder 11 (which preferably is of about 300 mm diameter) over about 2/3 of its circumferential development, and moves at a speed of between 1.5 and 3 m/min.

The proportions indicated above enable the microspheres 1 to sink to a predetermined level in accordance with to the reflecting angles desired.

After the microspheres 1 have been distributed on the material, the material is cooled, pressed and rewound. This operation is performed on the continuous belt by a group of cooler cylinders 14 and 18; the cooler cylinder 14 acts together in a pair with a rubber cylinder 15, together forming a press.

The polyethylene 8 side of the film housing the microspheres 1 is then covered with a thin first layer of primer 2 which is preferably added to by one or more silane derivatives (aminoalkylsilanes), among which, for example, aminopropyltriethoxysilane, the addition of which makes adhesion possible between inorganic surfaces (e.g. glass borosilicates) and organic polymers (polyurethane resins) through electrostatic interaction or with hydrogen bonds.Thus the microspheres 1 are bonded to the primer.

The primer is preferably constituted by a bi-component polyurethane resin. The operation is realised by means of an apparatus which comprises a rough-surfaced rotary cylinder 16 bathed in the primer, against which cylinder 16 an elastomer roller 17 counter-rolls.

In a further embodiment (not illustrated) the cylinder 16 is smooth.

The elastomer roller 17 presses the transiting film with no dragging at a predetermined pressure against the rotary cylinder 16, achieving a sort of lamination or "squeezing" leading to build-up of an excess of primer (denoted by 18 in the figure) in proximity of the zone where the rotary cylinder 16 meets and contacts the film.

Subsequently the external surface 3 of the first layer of primer 2 is specially treated before coating (using known methods and under vacuum conditions) with a thin layer of metal 4 (aluminium). This metal performs the desired reflecting function.

The layer of metal 4 is in turn coated with a second layer 5 of metal primer, preferably of a bicomponent polyurethane type.

On this layer 5 of primer a third layer 6 of protective primer will be applied for coupling with a material or heat-adhesive strip 7.

## Claims

1. A process for manufacturing a back-reflecting heat-adhesive strip or material, comprising :
fixing microspheres 1 on a thin polyethylene film (8) which is supported by a thin polyester film (9) to form a composite support (10);
heating the polyethylene film (8) up to a temperature at which it softens and sinking the microspheres (1) into it up to a predetermined depth;
covering the side of the polyethylene film (8) housing the microspheres (1) with a thin first layer of a primer (2);
performing a surface-treatment on the external surface (3) of the primer (2) layer;
applying under vacuum conditions a thin layer of metal (4) on the external surface (3) previously subjected to surface-treatment;
covering the metal layer (4) with a second layer (5) of a primer for metals;
spreading, on the second layer of primer (5), a protective third layer (6) of primer which third layer (6) is soft and resistant to water and detergents;
coupling a strip or a materiel (7) of heat-activated glue on the third layer (6) of protective primer;
storing for a predetermined period of time to enable polymerisation reactions to be completed;
optionally removing the composite support (10).

2. The process of claim 1, wherein, for fixing the microspheres (1) on the thin polyethylene film (8), the composite support (10), formed by the polyethylene film (8) and the polyester film (9), is heated to a temperature comprised between 110 degrees Celsius and 170 degrees Celsius.

3. The process of claim 2, wherein the thin first layer of primer (2) is preferably added with one or more silane derivatives, for example aminopropyltriethoxysilane, in order to promote adhesion between inorganic surfaces like glass borosilicates and organic polymers like polyurethane resins through electrostatic interaction or hydrogen bonds.

4. The process of claim 2 or 3, wherein the first layer (2) of primer used to make the first coating of the polyethylene film (8) housing the microspheres (1) is preferably made of a bicomponent polyurethane primer.

5. The process of claim 2, wherein the thin metal layer (4) deposited on the surface before the surface treatment thereon is constituted by aluminium.

6. The process of claim 2, wherein said second layer (5) of primer for metals is preferably of a bicomponent polyurethane type.

7. The process of claim 6, wherein the third layer (6) of protective primer is constituted by a bicomponent polyurethane primer.

## Patentansprüche

1. Verfahren zur Herstellung einer heissklebenden, retroreflektierenden Folie oder Materials, enthaltend:
- Anbringen von Mikrokügelchen (1) auf einer dünnen Polyäthylenfolie (8), welche von einer dünnen Polyesterfolie (9) getragen ist, um eine geschichtete Trägerfolie (10) zu bilden; Aufheizen der Polyäthylenfolie (8) bis auf eine Temperatur, bei welcher diese weich wird, und Versenken der Mikrokügelchen (1) in dieser bis zu einer bestimmten Tiefe;
- Abdecken der die Mikrokügelchen (1) enthaltenden Seite der Polyäthylenfolie (8) mit einer ersten Lage einer Grundierung (2);
- Durchführung einer Oberflächenbehandlung auf der äusseren Oberfläche (3) der Grundierlage (2);
- Aufbringen unter Vakuum einer dünnen Lage aus Metall (4) auf die äussere Oberfläche (3), die vorher einer Oberflächenbehandlung unterzogen worden ist;
- Abdecken der Lage aus Metall (4) mit einer zweiten Lage von Grundierung (5) für Metalle;
- Aufstreichen auf die zweite Lage der Grundierung (5) einer dritten Lage (6) von Schutzgrundierung, welche dritte Lage (6) weich und widerstandsfähig gegen Wasser und Reinigungsmittel ist;
- Anbringen eines Streifens oder eines Materials (7) aus heissaktiviertem Kleber auf der dritten Lage (6) der Schutzgrundierung;
- Lagern für eine bestimmte Zeit, um die Vervollständigung der Reaktionen der Polymerisierung zu erlauben;
- eventuelles Entfernen der geschichteten Trägerfolie (10).

2. Verfahren nach Patentanspruch 1, bei welchem zum Anbringen der Mikrokügelchen (1) auf der dünnen Polyäthylenfolie (8) die geschichtete Trägerfolie (10), gebildet aus der Polyäthylenfolie (8) und der Polyesterfolie (9), auf eine Temperatur aufgeheizt wird, die zwischen 110°C und 170°C liegt.

3. Verfahren nach Patentanspruch 2, bei welchem die erste dünne Lage der Grundierung (2) vorzugsweise mit einem oder mehreren Silanderivaten angereichert wird, zum Beispiel Aminopropyltriethoxysilan, um die Haftfähigkeit zwischen anorganischen Oberflächen, wie Borosilikatglass, und organischen Polymeren, wie Polyurethanharze, durch elektrostatische Wechselwirkungen oder Wasserstoffbindungen zu fördern.

4. Verfahren nach Patentanspruch 2 oder 3, bei welchem die erste Lage (2) der Grundierung, verwendet zum Herstellen der ersten Abdeckung der die Mikrokügelchen (1) enthaltenden Polyäthylenfolie (8) vorzugsweise aus einer Grundierung aus bikomponentem Polyurethan besteht.

5. Verfahren nach Patentanspruch 2, bei welchem die dünne Lage aus Metall (4), welche auf die zuvor behandelte Oberfläche aufgebracht wird, aus Aluminium besteht.

6. Verfahren nach Patentanspruch 2, bei welchem eine zweite Lage (5) von Grundierung für Metalle vorzugsweise aus einem bikomponenten Polyurethantyp besteht.

7. Verfahren nach Patentanspruch 6, bei welchem die dritte (6) der Schutzgrundierung aus einer bikomponenten Polyurethangrundierung besteht.

## Revendications

1. Procédé pour produire une feuille ou un tissu rétroréfléchissants thermo-adhésifs, comprenant:
- la fixation de micro-sphères (1) sur un film fin de polyéthylène (8) supporté par un film fin de polyester (9) pour former un support composite (10);
- le réchauffement du film polyéthylène (9) à une température à laquelle ce film se ramolli, en permettant aux micro-sphères de pénétrer en son intérieur selon une profondeur prédéterminée;
- le revêtement du côté du film polyéthylène (8) présentant les micro-sphères (1) avec une première fine couche d'apprêt (2);
- la réalisation d'un traitement de surface sur la surface externe (3) de la couche d'apprêt;
- l'application sous vide d'une fine couche de métal (4) sur la surface externe (3) auparavant soumise au traitement de surface;
- le revêtement de la couche de métal (4) avec une seconde couche (5) d'apprêt pour métaux;
- l'étendage, sur la seconde couche d'apprêt (5), d'une troisième couche protectrice (6) d'apprêt souple et résistante à l'eau et aux détergents;
- l'accouplement d'un ruban thermo-adhésif ou tissu (7) sur la troisième couche (6) d'apprêt protecteur;
- le stockage pendant une période de temps prédéterminée pour permettre l'achèvement des réactions de polymérisation;
- l'éventuel enlèvement du support composite (10).

2. Procédé selon la revendication 1, dans lequel, pour fixer les micro-sphères (1) sur le film fin de polyéthylène (8), le support composite (10), formé par le film polyéthylène (8) et le film polyester (9), est réchauffé à une température comprise entre 110°C e 170°C.

3. Procédé selon la revendication 2, dans lequel la fine couche d'apprêt (2) est préférablement additivée d'un ou plusieurs dérivés du silane, par exemple l'aminopropyltriethoxysilane, de manière à favoriser l'adhésion entre des surfaces inorganiques, comme les borosilicates de verre, et des polymères organiques, comme les résines de polyuréthane, par l'intermédiaire d'interactions électrostatiques ou liaisons hydrogène.

4. Procédé selon la revendication 2 ou 3, dans lequel la première couche (2) d'apprêt utilisée pour réaliser le premier revêtement du film polyéthylène (8) accueillant les micro-sphères (1) est préférablement constituée d'un apprêt polyuréthanique bi-composant.

5. Procédé selon la revendication 2, dans lequel la fine couche de métal (4) déposée sur la surface avant le traitement de surface est constituée d'aluminium.

6. Procédé selon la revendication 2, dans lequel ladite seconde couche (5) d'apprêt pour métaux est préférablement de type polyuréthanique bi-composant.

7. Procédé selon la revendication 6, dans lequel la troisième couche (6) d'apprêt protecteur est constituée d'un apprêt polyuréthanique bi-composant.
